# FASCICULE DE BREVET EUROPEEN

(11) **EP 3 178 631 B1**
(45) Date de publication et mention de la délivrance du brevet: **18.03.2020**
(21) Numéro de dépôt: 16306639.2
(22) Date de dépôt: 08.12.2016
(51) Int. Cl.: B29C 51/08, B29C 51/10, B29C 51/36, B29L 31/30

(54) **DISPOSITIF DE MOULE DE THERMOFORMAGE PAR ASPIRATION, PROCÉDÉ DE FABRICATION LE METTANT EN OEUVRE ET ELÉMENT FABRIQUE**
FORMVORRICHTUNG ZUM WARMFORMEN DURCH ANSAUGEN, PRODUKTIONSVERFAHREN, BEI DER SIE ZUM EINSATZ KOMMT UND HERGESTELLTER GEGENSTAND
SUCTION THERMOFORMING MOULD DEVICE, MANUFACTURING METHOD IMPLEMENTING SAME AND MANUFACTURED ELEMENT

(30) Priorité: 10.12.2015 FR 1562151
(43) Date de publication de la demande: 14.06.2017
(73) Titulaire: SMRC Automotive Holdings Netherlands B.V., 1077 ZX Amsterdam (NL)
(72) Inventeur: SAELEN, Marc, 59251 ALLENNES LES MARAIS (FR)
(74) Mandataire: Nuss, Laurent

(56) Documents cités:
- EP-A2- 1 854 616
- WO-A1-94/25248
- US-A- 5 074 770
- DATABASE WPI Week 200825 Thomson Scientific, London, GB; AN 2008-D41464 XP002757807, -& JP 2008 037056 A (CALSONIC CORP) 21 février 2008 (2008-02-21)

## Description

La présente invention concerne le domaine de la réalisation d'éléments de garniture ou d'habillage intérieur de véhicules automobiles, plus particulièrement les éléments de ce type comprenant ou constitués par une feuille ou plaque de matériau thermoplastique, conformée de manière adaptée et présentant ou non un motif en relief, formé dans la masse.

L'invention a plus spécifiquement pour objet un dispositif de moule pour la fabrication par formage sous pression négative de pièces à partir de feuilles ou de plaques, et un procédé de fabrication utilisant ce dispositif et un élément de garniture obtenu par ce procédé.

Différents procédés de fabrication de pièces par formage sous pression négative (plus connu sous la désignation anglaise "Negative Vacuum Forming") sont déjà connus dans l'état de la technique (voir par exemple : FR 2 900 862, US 2013/0221698).

Généralement, dans ce type de procédé, une feuille ou une plaque de matière plastique est préchauffée, puis placée entre deux parties de moule (ou demi-moules) qui la préforme durant la fermeture et, après fermeture totale du moule, un vide relatif est appliqué au niveau de la partie de moule venant en contact avec la face visible de la pièce, pour réaliser le formage définitif de la pièce. Eventuellement lors de l'appui sous pression du fait de l'aspiration surfacique, un motif en relief ou grainage est réalisé sur la surface visible (motif négatif présent sur la partie de moule soumise à aspiration).

Cette méthode de formage par vide présente de nombreux avantages parmi lesquels notamment une excellente qualité du motif et des déformations que doit comporter la surface visible, ainsi qu'une localisation précise de ces derniers.

Néanmoins, lorsque le motif doit être changé, même localement, et/ou si une ou plusieurs déformations particulière(s) est (sont) prévue(s), par exemple pour différentes versions d'une même pièce, il est nécessaire de disposer d'autant de parties de moule (au moins pour la face visible) que de versions de la pièce, même si certaines de ces versions ne se distinguent entre elles que par des différences mineures ou locales (modification de la taille ou de la forme d'un renfoncement de logement d'un accessoire, gestion de la présence/absence de zones localement déformées, création d'ébauches de zones de montage ou d'ancrage d'équipements ou d'éléments décoratifs saillants, ...)

En outre, le remplacement nécessaire des parties de moule entre deux phases de fabrication de versions différentes d'une même pièce fait chuter le rendement et la productivité de l'outillage et du personnel et nécessite l'acquisition de moyens spécifiques autorisant un changement rapide des parties du moule.

Dans la pratique actuelle, le thermoformage négatif d'une peau ou d'une pièce en matériau thermoplastique est généralement réalisé à l'aide d'une partie de moule sous forme de coquille en nickel présentant de minuscules trous permettant l'évacuation de l'air entre la feuille à former et à imprimer et ladite coquille. La dépression exercée par ce vide permet la mise en forme et la gravure du grain de la feuille. Cette coquille est réalisée de manière monobloc par électrodéposition. Il est extrêmement difficile voire impossible d'avoir une partie additionnelle sans que la jointure entre les deux parties de coquille ne soit visible sur la pièce réalisée. Si l'on souhaite donc des structures optionnelles tels que des logements pour une baguette décorative, des aérateurs, des boutons de démarrage, il est actuellement impératif d'avoir autant de coquilles différentes que de versions optionnelles.

Pour tenter de surmonter cette limitation, la demanderesse a développé une première solution dans laquelle la partie de moule complémentaire (par rapport à la partie de moule en forme de coquille réalisant le thermoformage négatif) est équipée d'une pièce de formage local en creux, mobile et reliée à une source de vide ou d'aspiration.

Lors de son activation, consécutivement au thermoformage général de la feuille chauffée par aspiration contre la première partie de moule, cette pièce de formage crée avec la feuille, qui est dans un état autorisant sa déformation plastique, une cavité d'aspiration réalisant la déformation locale souhaitée.

Cette solution est décrite dans la demande de brevet européen EP 2 955 000 au nom de la demanderesse. Bien que cette solution donne satisfaction, il a été constaté que dans certaines conditions, en fonction notamment du séquencement du procédé, du type de matériau de la feuille et/ou de l'épaisseur de cette dernière, la peau ou pièce préformée traitée par thermoformage négatif peut subir, alors qu'elle n'est pas encore totalement refroidie et que l'aspiration du côté de la coquille a été coupée, (semi-liberté de la peau/pièce entre les deux parties de moule), un retrait, avec des dimensions finales de la pièce résultante inférieures aux dimensions attendues.

La présente invention a notamment pour but de pallier cet inconvénient, en proposant une seconde solution dans le contexte précité.

Par ailleurs, par le document WO 94/25248, on connaît déjà un dispositif de moule de thermoformage présentant sensiblement les caractéristiques du préambule de la revendication 1 annexée, avec notamment une partie de moule avec deux zones d'aspiration distinctes au niveau de sa surface de travail.

Toutefois, dans ce document, aucune possibilité de déformation sélective des pièces ou peaux traitées par le dispositif de moule n'est fournie. A fortiori aucune déformation locale précise avec des bords dont la finition est maîtrisée ne peut être réalisée.

Les documents JP 2008/037056, US 5074770 et EP 1 854 616 illustrent d'autres réalisations de dispositifs de moule de thermoformage présentant au moins les mêmes lacunes que celui du document WO précédent.

L'invention vise également à surmonter les limitations de l'état de la technique indiquées ci-dessus en relation avec les quatre documents précités.

Ce but est atteint par l'invention selon les revendications 1, 10 et 15.

L'invention concerne également un procédé de fabrication utilisant le dispositif de moule précité.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- les figures 1A et 1B sont des vues schématiques en élévation latérale et en coupe d'un dispositif de moule de thermoformage par aspiration ou pression négative, selon deux modes de réalisation de l'invention ;
- la figure 1C est une vue en coupe schématique d'une première partie de moule faisant partie d'un dispositif tel que représenté figure 1A ou 1B, selon un mode de réalisation particulier de l'invention ;
- les figures 2A à 2D, d'une part, et les figures 4A à 4G, d'autre part, sont des vues schématiques en coupe et en élévation latérale d'un dispositif de moule tel que représenté figure 1B, illustrant les différentes étapes opérationnelles consécutives de fabrication d'une pièce ou peau à paroi mince en accord avec le procédé selon l'invention, à savoir respectivement sans déformation locale en creux (figures 2A à 2D) et avec déformation locale en creux (figures 4A à 4G) ;
- la figure 3 est une vue en coupe d'une pièce ou peau obtenue avec la variante d'exécution du procédé des figures 2A à 2D ;
- la figure 5A est une vue en coupe d'une pièce obtenue avec la variante d'exécution du procédé des figures 4A à 4G et ;
- la figure 5B est une vue à une autre échelle du détail A de la figure 5A, et
- les figures 6A à 6C sont des vues de détail, en élévation latérale et en coupe, illustrant trois étapes consécutives d'une variante de réalisation du procédé de fabrication selon l'invention, plus particulièrement des phases de déformation et de démoulage, à l'aide d'un dispositif de moule tel que représenté figure 1B.

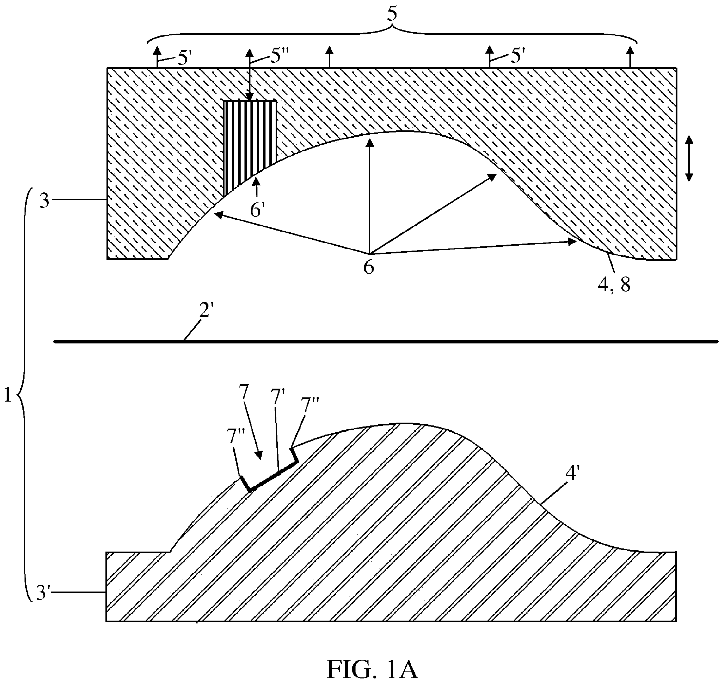

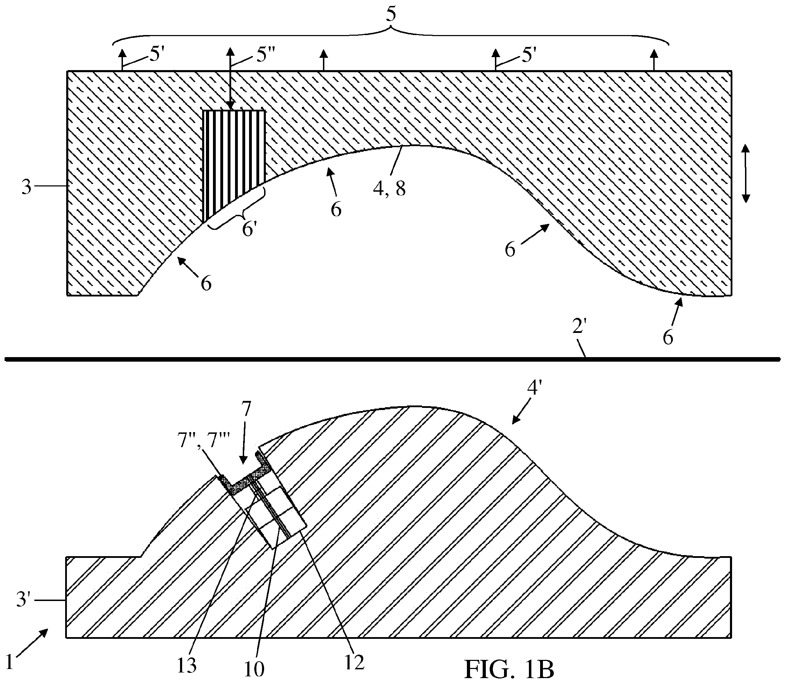

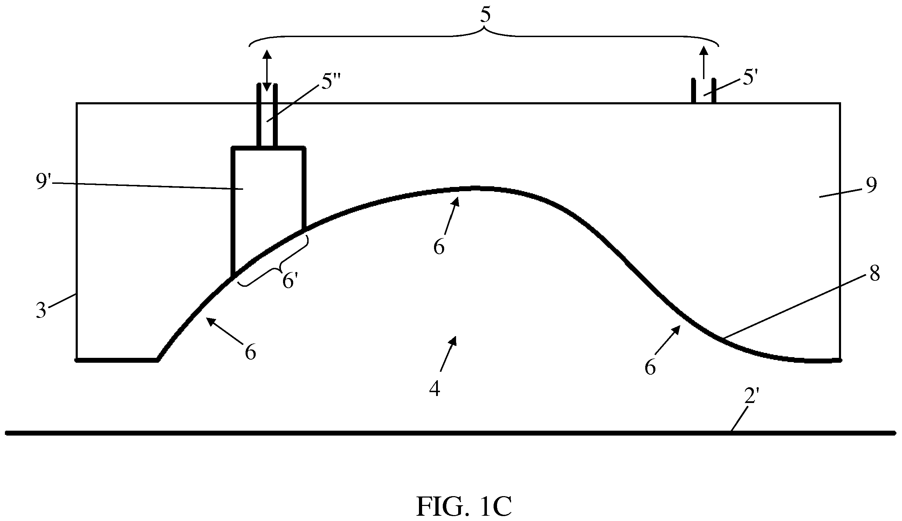

Les figures 1, 2 et 4 des dessins annexés montrent un dispositif de moule de thermoformage pour la réalisation d'une pièce ou peau 2 à paroi 2" mince à partir d'une feuille 2 en un matériau thermoplastique.

Ledit dispositif de moule 1 comprend deux parties de moule 3 et 3' avec des surfaces de travail 4, 4' de formes sensiblement complémentaires ou non et dont l'une des parties au moins est mobile de manière à définir un état d'ouverture et un état de fermeture du moule, une première 3 des deux parties de moule 3, 3' comportant des moyens d'aspiration 5 pour plaquer la feuille 2' contre sa surface de travail 4 qui réalise en définitive le formage de la pièce 2 par déformation sous vide (forme générale + motif en relief).

Les moyens d'aspiration 5 comportent, d'une part, un moyen d'aspiration principal 5' apte et destiné à générer une pression négative ou aspiration sur une portion majoritaire 6 de la surface de travail 4 de ladite première partie 3 de moule et, d'autre part, au moins un moyen d'aspiration secondaire 5" apte et destiné à générer une pression négative ou aspiration au niveau d'au moins une zone limitée particulière 6' de ladite surface de travail 4, ce au moins partiellement de manière indépendante par rapport au moyen d'aspiration principal 5'.

Pour des raisons de simplification des représentations, les moyens d'étanchéité, d'aspiration sous vide et de déplacement des parties de moule 3 et 3' ne sont pas représentés sur les figures annexé ou alors en partie schématiquement sur la figure 1C.

Conformément à l'invention, la seconde partie de moule 3' comporte au moins une pièce rapportée de formage en creux 7, ladite pièce 7 étant arrangée de manière à être située, lorsque le moule est fermé, directement en regard de la ou respectivement de chaque zone limitée particulière 6' de la surface de travail 4 de la première partie de moule 3, le ou chaque moyen d'aspiration secondaire 5" pouvant être commandé, au moins pour son arrêt ou en vue d'une suspension de l'aspiration, indépendamment du moyen d'aspiration principal 5'.

Ainsi, l'invention fournit un dispositif de moule 1 qui permet sélectivement de réaliser des pièces ou peaux 2 avec ou sans zone(s) à déformation locale 14 en creux, ce en fonction de la commande dudit dispositif 1 et tout en conservant durant cette opération de déformation locale, un maintien intime de ladite peau ou pièce 2 contre la première partie de moule 3, au niveau de la portion majoritaire 6 de la surface de travail 4, empêchant ainsi toute rétraction ou toute déformation de cette peau ou pièce 2 dans les régions non soumises à déformation locale.

Lorsque la feuille 2' est préchauffée, l'aspiration au niveau de la portion majoritaire 6 de la zone de travail 4 sera avantageusement maintenue jusqu'à solidification complète et figeage de la peau ou pièce 2.

Bien entendu, la portion 6 et la ou les zone(s) 6' de la surface de travail 4 peuvent être reliées à une même source d'aspiration ou de vide contrôlée par les moyens de pilotage du dispositif de moule 1 (non représentés), avec interposition d'au moins un moyen de coupure spécifique pour l'alimentation de la ou chaque zone 6' (non représenté). En variante, la portion 6 et la ou chaque zone 6' peuvent également être reliées à des sources distinctes (figure 1C).

L'homme du métier comprend aisément qu'avec les dispositions précédentes, il est possible, avec un même dispositif de moule 1, de réaliser différentes versions d'une même peau ou pièce 2, à savoir : sans aucune zone 14 localement déformée, avec une ou certaines zone(s) 14 présente(s), ou encore avec l'ensemble des zones 14 précédentes, lorsqu'une pluralité de pièces 7 sont prévues et qu'aucune, certaines ou toutes sont utilisées durant la fabrication de la pièce ou peau 2 concernée. De plus, ces différentes versions peuvent être fabriquées dans un ordre voulu et choisi (ou imposé par les commandes) sans impacter la productivité, ni le rendement en terme de pièces produites, à l'exception du temps supplémentaire nécessaire pour réaliser la ou les déformations locales additionnelles. Toutefois, une partie au moins de cette durée est en tout état de cause nécessaire pour permettre un refroidissement suffisant de la pièce 2 fraîchement formée dans le moule.

En accord avec une première variante de réalisation de l'invention, le ou chaque moyen d'aspiration secondaire 5" et apte et destiné à générer une pression positive ou une action de soufflage au niveau de la ou de chaque zone limitée particulière 6' de la surface de travail de la première partie de moule 3, de manière à pousser localement la feuille 2' ou paroi 2" vers et dans la pièce 7.

Ainsi, la ou chaque déformation locale de la feuille 2' ou paroi 2" de la pièce ou peau 2 est obtenue par une action positive produite par la première partie de moule 3, pouvant être reliée à une source de pression positive adapté (en alternance avec une source d'aspiration pour la ou les zone(s) limitée(s) particulière(s) 6'), la seconde partie de moule 3' pouvant être dépourvue de tout moyen actif de formage ou déformation.

Selon un mode de réalisation avantageuse de l'invention, ressortant des figures 1, 2 et 4 notamment, la première partie de moule 3 comporte une paroi multiperforée ou poreuse 8 perméable aux gaz, fournissant la surface de travail 4 de ladite partie 3, une chambre d'aspiration principale 9 et au moins une chambre d'aspiration secondaire 9', lesdites chambres 9 et 9' étant situées du côté de la paroi 8 opposée à la surface de travail 4, reliées à une ou plusieurs lignes d'aspiration et délimitées en partie par une portion de la paroi poreuse ou multiperforée 8 correspondant à la portion majoritaire 6 de la surface de travail 4 ou à une ou au moins une zone limitée particulière 6' de ladite surface 4, respectivement, ladite paroi poreuse 8, les chambres d'aspiration 9 et 9' et la ou les lignes d'aspiration formant ensemble les moyens d'aspiration principal 5' et secondaire(s) 5".

Conformément à une autre caractéristique de l'invention, la surface de travail 4 de la première partie de moule 3 comporte des motifs structurels en relief sur toute son étendue, à savoir au niveau de sa portion majoritaire 6 et de sa ou ses zone(s) limitée(s) particulière(s) 6'.

Ainsi, des motifs en relief 16 (par exemple un grainage) peuvent être présents, même sur la ou les portions de paroi 2" subissant une déformation locale en creux, aussi bien au niveau du fond que des faces latérales de ces déformations 14.

Préférentiellement, et pour faciliter la déformation au niveau des bordures des zones 14 de la paroi 2" de la peau ou pièce 2, il est prévu que la ou chaque zone limitée particulière 6 de la surface de travail 4 de la première partie de moule 3 présente une extension surfacique au moins légèrement supérieure à celle de la pièce rapportée de formage en creux 7 correspondante présente sur la seconde partie de moule 3', notamment légèrement débordante périphériquement.

Pour aboutir à une déformation locale 14 précise, avec des bords 14" dont la finition est maîtrisée, l'invention propose que la ou chaque pièce rapportée de formage en creux 7 soit mobile en translation, préférentiellement selon une direction sensiblement perpendiculaire à la surface de travail 4' de la seconde partie de moule 3' ou au plan qui est tangent localement à ladite surface de travail 4', ladite pièce 7 étant avantageusement montée de manière interchangeable sur ladite seconde partie de moule 3'.

Ainsi, la ou chaque pièce 7 peut être déplacée pour venir en contact avec la paroi 2" avant la réalisation de la déformation locale de cette dernière. En outre, différents types de pièces 7 peuvent être le cas échéant prévues.

En accord avec une seconde variante de réalisation de l'invention, qui peut être considérée de manière alternative ou cumulative par rapport à la première variante précitée, il peut être prévu qu'une ligne d'aspiration 10 soit associée à la ou à chaque pièce rapportée de formage en creux 7, ladite pièce 7 présentant avantageusement une paroi poreuse ou multiperforée 7' fournissant la surface de travail ou de conformation en creux.

En accord avec un mode de réalisation pratique de cette seconde variante, combinée ou non avec la première variante exposée précédemment, la seconde partie de moule 3' comprend au moins une pièce de formage en creux 7 présentant un bord périphérique 7", pouvant être reliée sélectivement à une source d'aspiration ou de mise en dépression par une ligne d'aspiration 10 et pouvant être déplacée entre, d'une part, une position repliée, dans laquelle ladite pièce de formage 7 est située au plus en affleurement avec la paroi 2" de la pièce thermoformée 2, voire en retrait ou au plus en affleurement par rapport à la surface de la seconde partie du moule 3' et, d'autre part, une position déployée, dans laquelle ladite pièce de formage 7 vient, avec son bord périphérique 7", à proximité de ou en application contre la paroi 2" de la pièce thermoformée 2 en appui contre la première partie de moule 3 (distance bord 7" - feuille 2" comprise par exemple entre 0 et 1 mm).

Préférentiellement, le bord périphérique 7" de la pièce de formage 7 présente une conformation incurvée vers l'intérieur, éventuellement pourvu d'un joint de compression 7"', apte à délimiter, lors du contact ou en début de déformation, une chambre 11 sensiblement étanche avec la paroi 2" de la pièce thermoformée 2. De plus, ladite pièce de formage en creux 7 peut être montée mobile, éventuellement avec guidage en translation dans un logement 12 ménagé dans la seconde partie de moule 3', ledit guidage étant préférentiellement également assuré en position déployée de ladite pièce de formage 7.

Le bord 7" présente ainsi un profil (surtout une face interne de profil de bord) adapté à la forme recherchée pour le bord 14" de la zone déformée 14, en particulier au moins légèrement arrondie ou courbe pour éviter la rupture de la feuille 2' et donc de la paroi 2" de la pièce 2. Ainsi, la forme du bord 7" (en fait la conformation du côté intérieur de ce bord) détermine la forme du bord 14" de la zone localement déformée 14 de la pièce 2.

De manière avantageuse, la pièce de formage en creux 7, avantageusement en forme de coquille, est montée sur au moins un axe support 13, préférentiellement de manière aisément interchangeable, lequel présente un canal d'aspiration, ou est traversé par un conduit d'aspiration 10 relié à au moins un orifice traversant, à des canaux secondaires ou à des micro-perforations ménagé(s) dans la paroi 7' de ladite pièce de formage 7 et débouchant sur la face interne de travail ou de conformation de ladite pièce de formage 7. En outre, le déplacement bidirectionnel de cette pièce de formage en creux 7 peut être réalisée par l'intermédiaire d'un vérin pneumatique ou hydraulique, monté et positionné sur ou dans la seconde partie de moule 3', le guidage en coulissement de ladite pièce 7 étant réalisé par le vérin et/ou par une structure de guidage particulière additionnelle.

Le mode de réalisation représenté à titre d'exemple sur les figures annexées ne montre qu'une seule pièce de formage en creux 7.

Néanmoins, en variante, et bien que non représentés, au moins deux pièces 7, montées dans la même partie de moule 3, 3' ou non et activables sélectivement et indépendamment, peuvent être prévues.

Du fait du montage amovible éventuel de la ou de chaque pièce de formage en creux 7, il est possible d'aboutir à une encore plus grande universalité du dispositif de moule 1, en particularité une plus grande polyvalence en terme de fabrication de versions différentes de la pièce 2.

L'invention a également pour objet un procédé de fabrication d'une pièce 2 à paroi mince à partir d'une feuille 2' en un matériau thermoplastique, par mise en œuvre du dispositif 1 de moule décrit précédemment, ladite pièce 2 devant ou non comprendre au moins une zone localisée 14 présentant une configuration particulière.

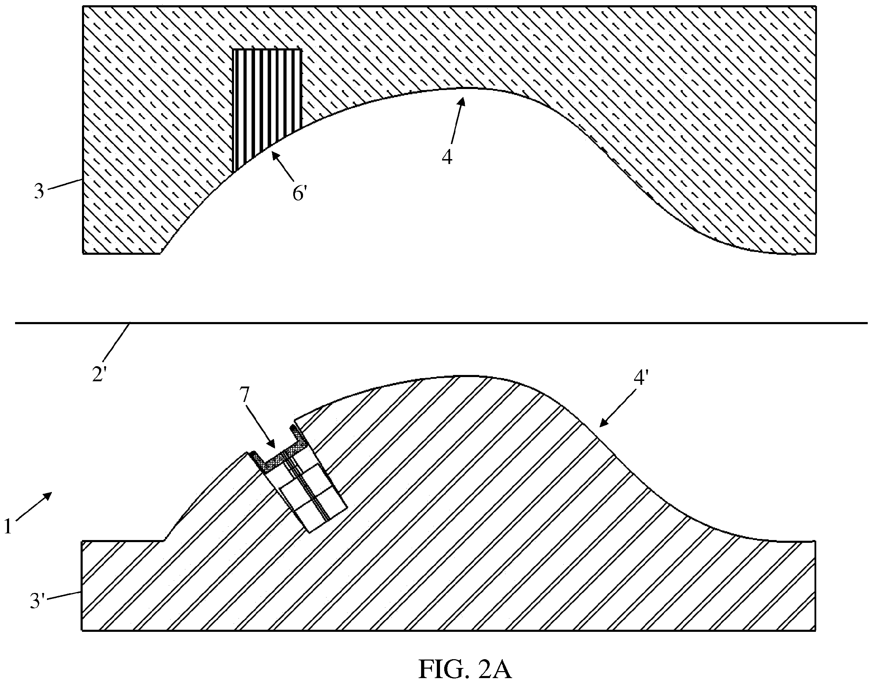

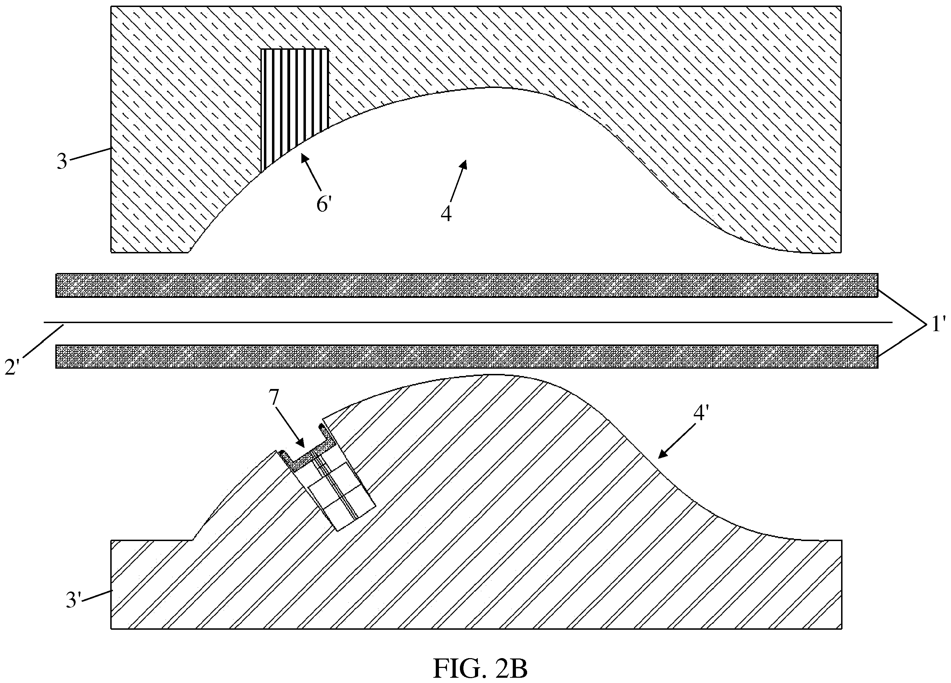

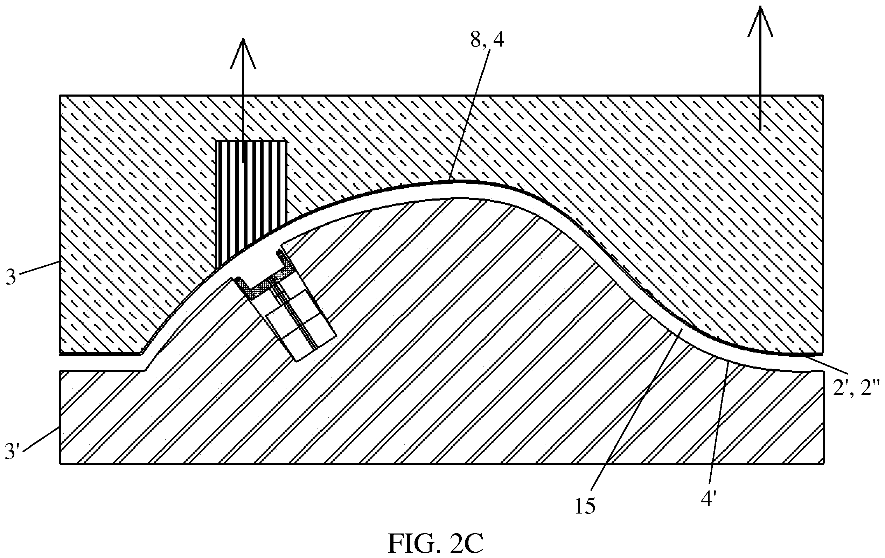

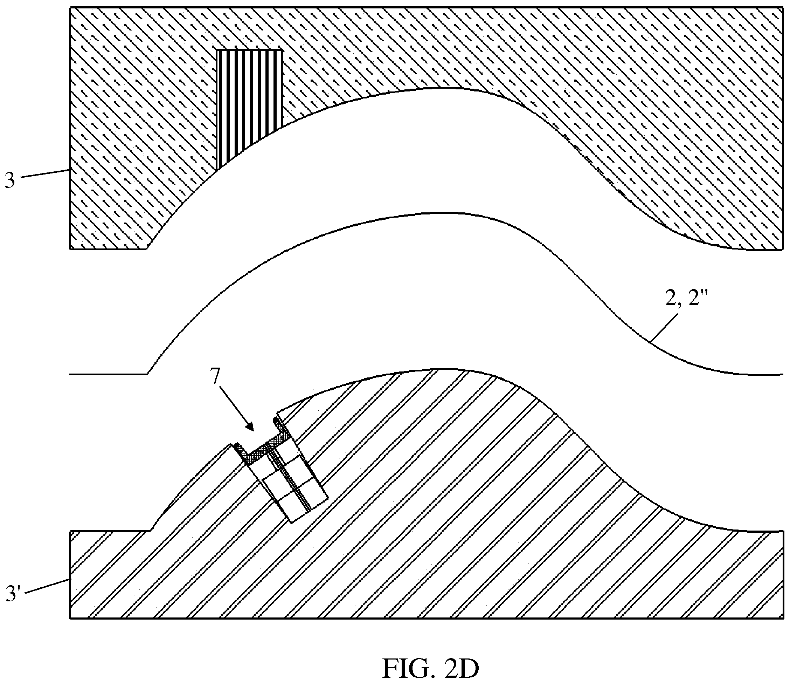

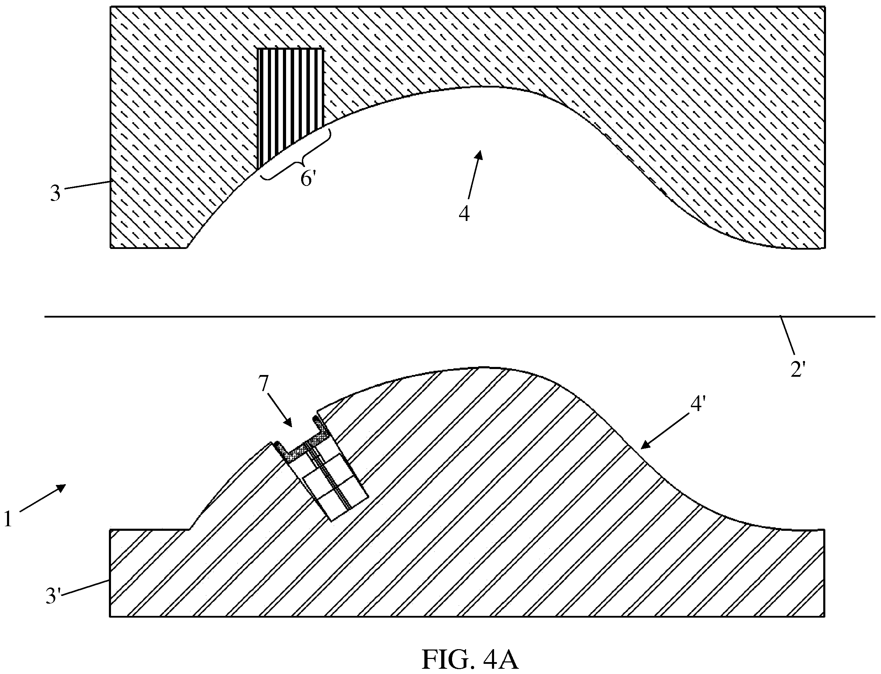

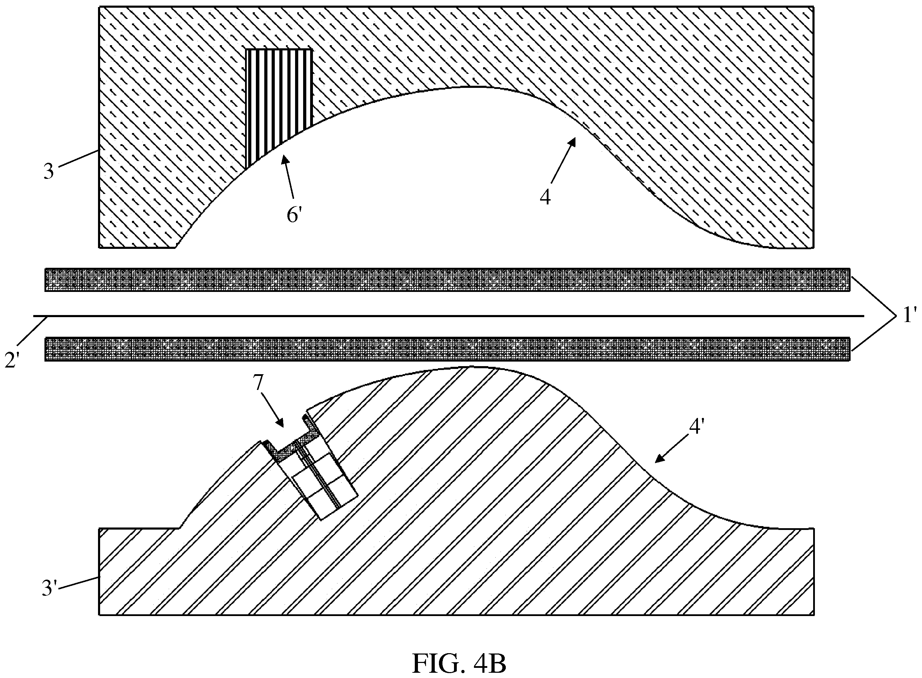

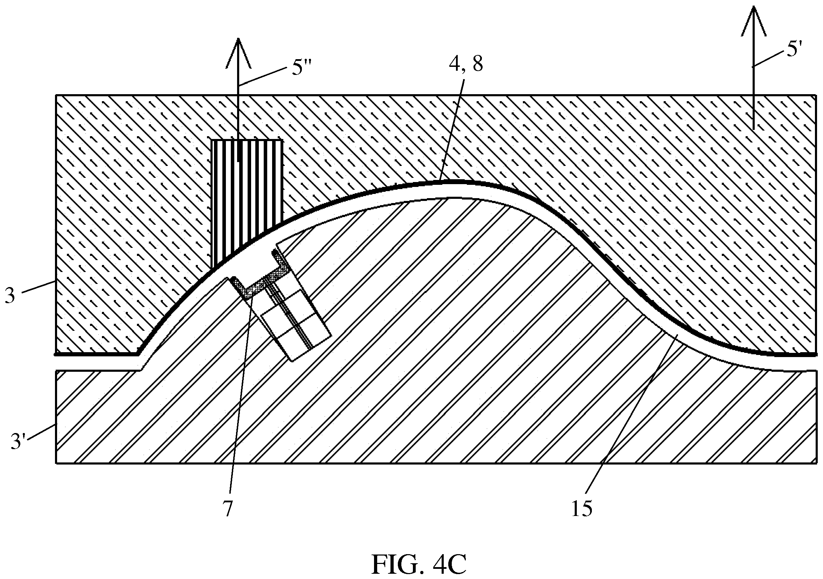

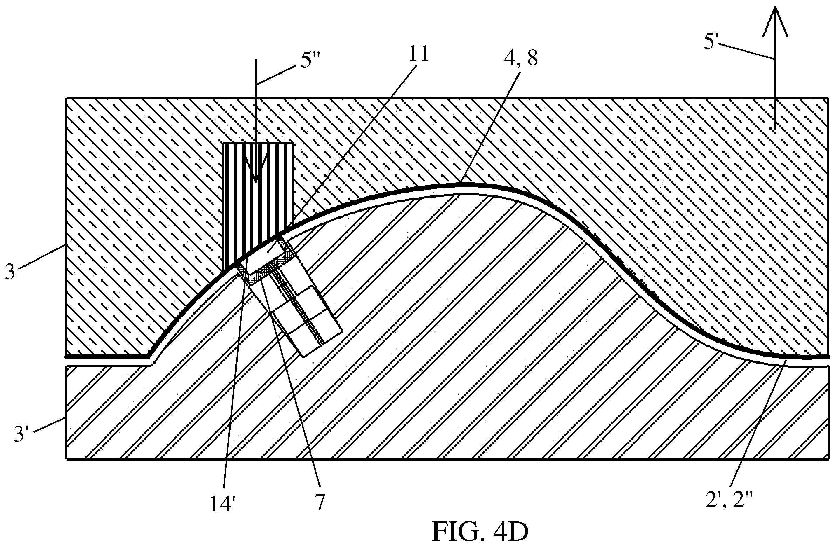

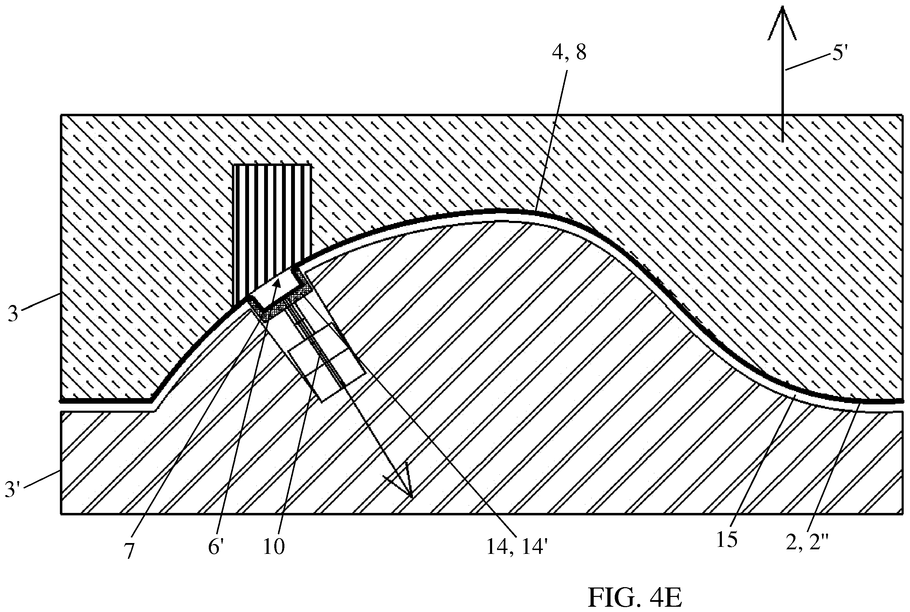

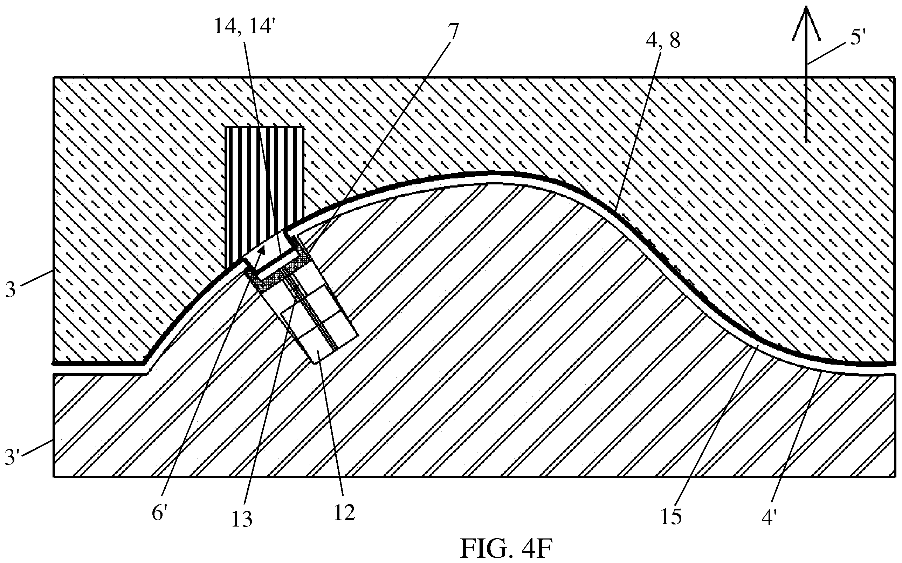

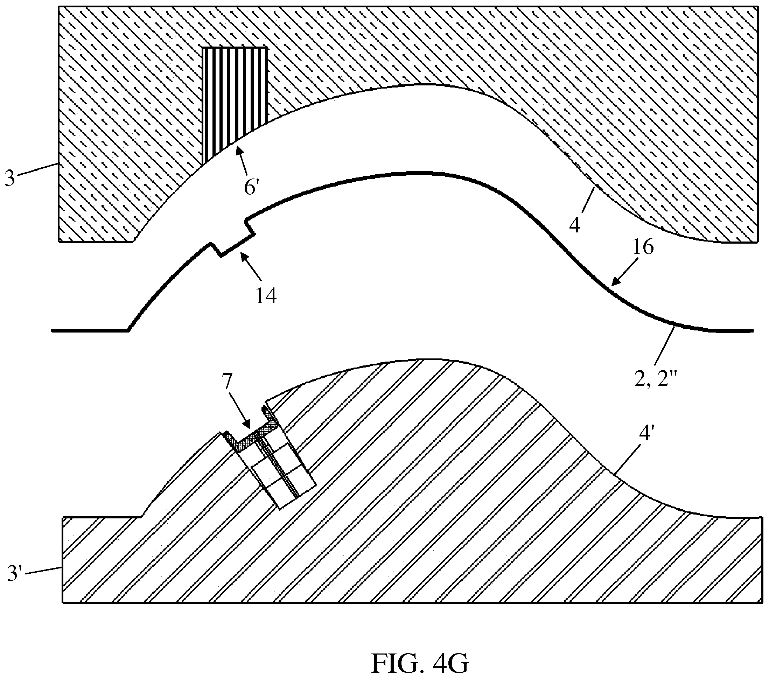

Ce procédé consiste comme le montrent les figures 2 et 4 des dessins annexés, à mettre en place une feuille 2', éventuellement soumise à un préchauffage, entre des première et seconde parties de moule 3 et 3', à fermer ledit moule pour former une cavité sensiblement étanche 15 entre les deux parties de moule 3 et 3', et éventuellement préformer ladite feuille 2', et à conformer ladite feuille 2' par déformation plastique par son application intime contre la surface de travail ou de conformation 4 d'une première partie de moule 3 sous l'effet d'une succion ou aspiration de manière à réaliser la pièce 2, à ouvrir le moule et à en extraire la pièce thermoformée 2 résultante.

Conformément à l'invention, ledit procédé consiste, en outre, de manière sélective et en fonction de la version de la pièce 2 à obtenir, à réaliser le cas échéant au moins une déformation locale de la feuille 2', après conformation de ladite feuille 2' par application contre la première partie de moule 3 et alors que cette dernière est dans un état autorisant sa déformation plastique, ladite ou chaque opération de déformation locale étant effectuée par déplacement de la portion de feuille 14' concernée dans une pièce de formage en creux 7 présente au niveau de la seconde partie de moule 3', après suppression de l'aspiration au niveau de la ou des zone(s) limitée(s) particulière(s) 6' de la surface de travail 4 de la première partie de moule 3, le déplacement de la ou des portions de feuille 14' à déformer étant obtenu par une action de soufflage au niveau de la ou des zone(s) limitée(s) particulière(s) 6', par une action d'aspiration au niveau de la pièce de formage en creux 7 ou par une combinaison des deux actions précitées, la feuille 2' étant maintenue intimement contre la portion majoritaire 6 de la surface de travail 4 de la première partie de moule 3 durant la réalisation de la ou des déformation(s) locale(s) 14.

Plus précisément, et en relation avec une variante préférée de l'invention, l'étape de réalisation d'une déformation locale 14 de la feuille 2' consiste à effectuer les opérations suivantes :
- relâchement de l'aspiration au niveau de la zone limitée particulière 6' concernée de la surface de travail 4 de la première partie de moule 3 ;
- déplacement de la pièce de formage en creux 7 depuis sa position repliée jusqu'à une position déployée dans laquelle elle vient à proximité de ou en appui, éventuellement sous pression contrôlée, contre la feuille 2' formant la paroi 2" de la pièce 2, avec son bord périphérique 7" ;
- application d'une aspiration ou réalisation d'une dépression dans la pièce de formage 7 et/ou soufflage depuis la zone limitée particulière 6' de manière à déformer localement la feuille 2' et à la plaquer intimement contre la surface de la paroi 7' de ladite pièce de formage ;
- coupure de l'aspiration au niveau de la pièce 7 et/ou suppression du soufflage au niveau de la portion de surface 6' ;
- déplacement de la pièce de formage 7 vers sa position repliée.

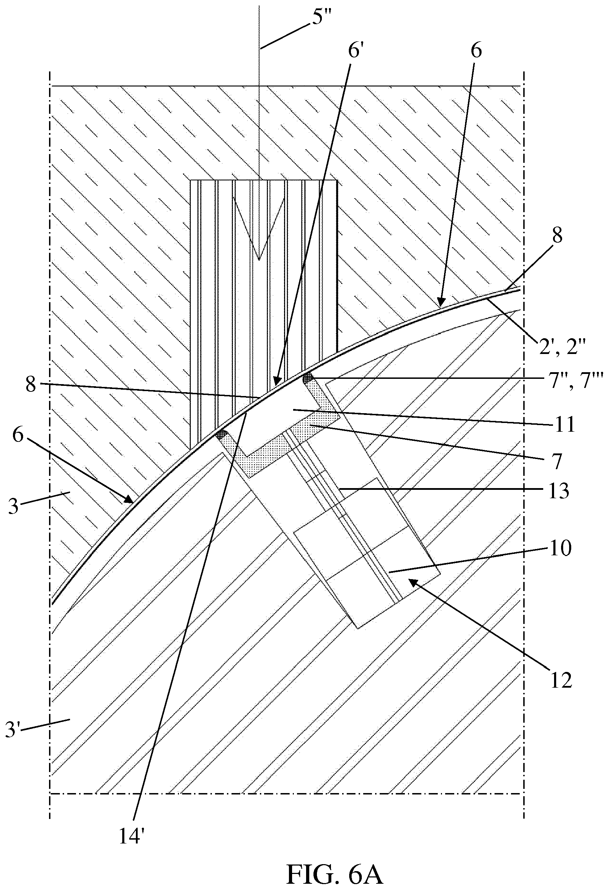

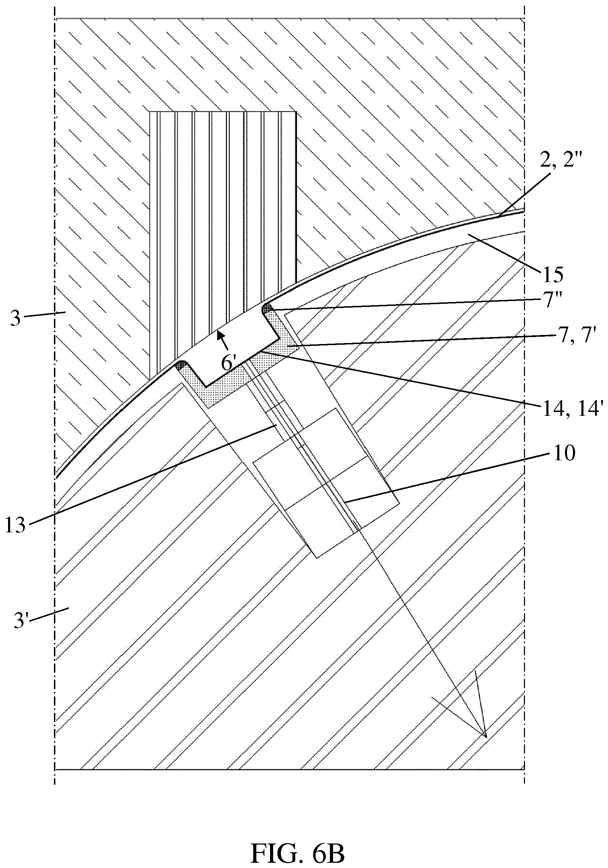

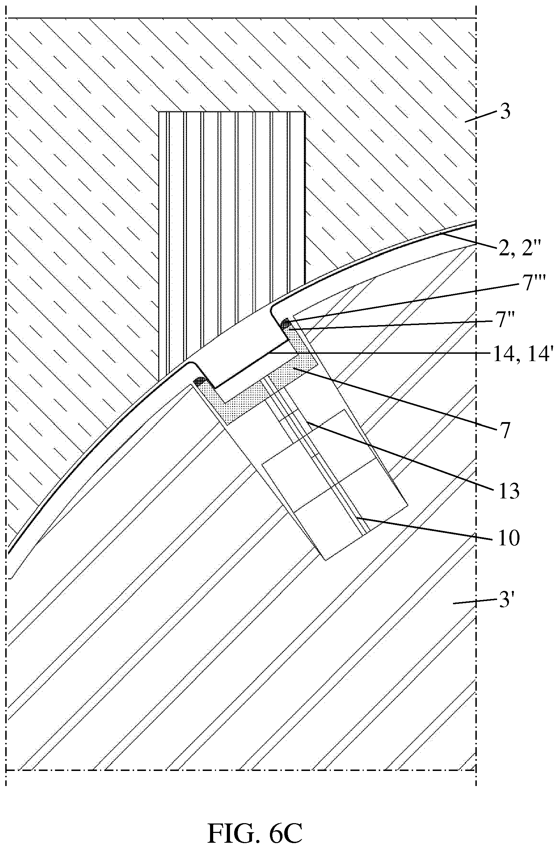

En accord avec une sous-variante du procédé selon l'invention, ressortant des figures 6A à 6C, celui-ci peut consister, après relâchement de l'aspiration au niveau de la ou de chaque zone limitée particulière 6', à réaliser tout d'abord une première déformation locale par soufflage pour amener la feuille 2' en contact avec le bord 7" de la pièce 7, puis à réaliser une déformation complémentaire et le formage définitif de la zone 14 de peau 2' concernée par aspiration contre la face interne de ladite pièce 7.

A titre d'exemple, et en particulier lorsque la feuille 2 est constituée d'un matériau du type polyéthylène, polypropylène ou encore polychlorure de vinyle, ladite feuille 2 est préchauffée pour être à une température d'environ 180°C à 210°C durant la phase de formage par aspiration, la phase consécutive optionnelle de déformation locale par soufflage et/ou aspiration et par l'intermédiaire de la pièce 7 étant effectuée lorsque le matériau se trouve encore dans un état déformable plastiquement, à savoir à une température d'environ 150°C à 170°C.

Dans un contexte de gestion de production optimisée, le procédé peut consister à produire sélectivement, sur une période de production déterminée, et en fonction d'un programme de fabrication donné résultant par exemple d'un regroupement de commandes clients diversifiées en termes de version de la pièce 1 souhaitée, des pièces 2 comportant ou non une ou plusieurs zone(s) 14 locale(s) à déformation ou configuration particulières.

Dans le contexte précité, le procédé peut en outre consister, entre deux cycles ou programmes de fabrication de pièces 2 de versions différentes et devant présenter une ou des zone(s) 14 localement déformée(s) de configuration(s) et d'aspect(s) différents, à interchanger une ou plusieurs pièce(s) de formage en creux 7.

En relation avec les figures 2A à 2D, d'une part, et les figures 4A à 4G, d'autre part, on comprend que deux scénarii de déroulement du procédé de fabrication d'une pièce 2 sont implémentables avec le dispositif de moule 1 tel que ressortant de la figure 1B, à savoir :
- introduction et préchauffage de la feuille 2' (figures 2A et 2B/figures 4A et 4B : ces figures sont identiques) ;
- fermeture du moule et aspiration au niveau de la totalité de la surface de travail 4, par mise en œuvre du moyen d'aspiration principal 5' et du moyen d'aspiration secondaire 5" (figures 2C et 4C, qui sont identiques)
- option 1 : après refroidissement de la pièce 2, l'aspiration est coupée (au niveau des moyens 5' et 5"), le moule est ouvert et la pièce est extraite (figure 2D) ;
- option 2 : la pièce de formage en creux 7 est déployée par translation et vient en contact avec la paroi 2" de la pièce 2 plaquée contre la surface de travail 4, l'aspiration est relâchée au niveau de la zone 6' (en étant maintenue au niveau du reste de la surface 4) et une action de soufflage par cette zone 6' et/ou une action d'aspiration au niveau de la pièce 7 débute(nt) (figure 4D) ; la portion de paroi 14' se déforme et prend la forme intérieure de la pièce 7 (figure 4E) ; l'aspiration locale et/ou le soufflage est coupé(e) et la pièce 7 se retire dans la seconde partie de moule 3' par translation, en démoulant la portion déformée 14' (figure 4F) ; l'aspiration est coupée, le moule est ouvert et la pièce 2 est extraite après refroidissement (figure 4G).

Les moyens 1' de chauffage de la feuille 2' peuvent soit être fixes et disposés à côté du moule (chauffage de la feuille 2' avant sa mise en place entre les deux parties du moule 3 et 3' écartées), soit être mobiles (chauffage de la feuille 2' dans le moule avant sa fermeture, comme représenté aux figures 2B et 4B).

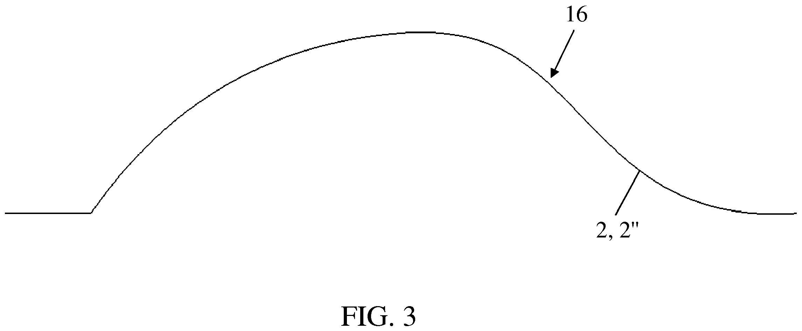

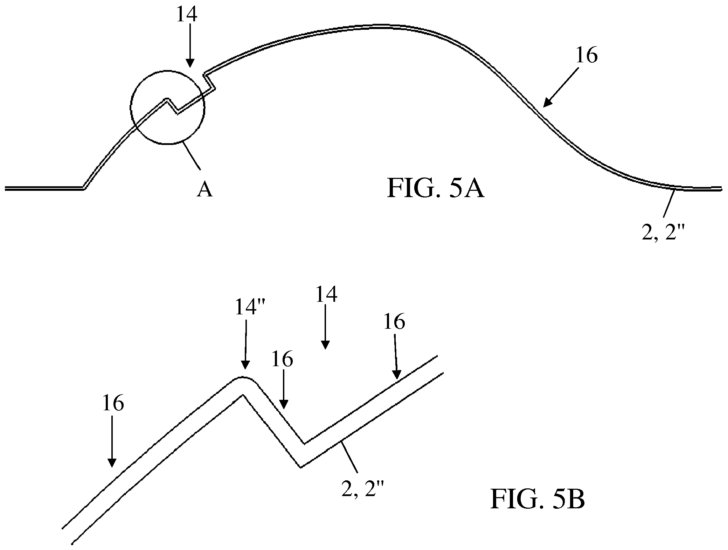

Enfin, comme le montrent les figures 3 et 5, l'invention porte aussi sur un élément de garniture ou d'habillage intérieur soit formé par une pièce 2 thermoformée à paroi 2" mince, soit comprenant une face apparente fournie par une telle pièce 2. Cette pièce 2 comporte optionnellement au moins une zone localisée 14 présentant une déformation locale de sa paroi 2" ou une configuration locale particulière, notamment une déformation en creux, et fait préférentiellement état en surface d'un motif ou relief répétitif 16.

En accord avec l'invention, la pièce thermoformée 2 est obtenue par l'intermédiaire du procédé de fabrication décrit précédemment et comporte au moins une déformation en creux 14, formant par exemple un logement pour la réception d'un accessoire, ainsi qu'éventuellement un motif en relief répétitif, présent sur toute la surface de ladite pièce 2.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de moule de thermoformage pour la réalisation d'une pièce à paroi mince à partir d'une feuille en un matériau thermoplastique,
ledit dispositif de moule (1) comprenant deux parties de moule (3 et 3') avec des surfaces de travail (4, 4') de formes sensiblement complémentaires et dont l'une des parties au moins est mobile de manière à définir un état d'ouverture et un état de fermeture du moule, une première (3) des deux parties de moule (3, 3') comportant des moyens d'aspiration (5) pour plaquer la feuille (2') contre sa surface de travail (4),
les moyens d'aspiration (5) comportant, d'une part, un moyen d'aspiration principal (5') apte et destiné à générer une pression négative ou aspiration sur une portion majoritaire (6) de la surface de travail (4) de ladite première partie (3) de moule et, d'autre part, au moins un moyen d'aspiration secondaire (5") apte et destiné à générer une pression négative ou aspiration au niveau d'au moins une zone limitée particulière (6') de ladite surface de travail (4), ce au moins partiellement de manière indépendante par rapport au moyen d'aspiration principal (5'),
le ou chaque moyen d'aspiration secondaire (5") pouvant être commandé, au moins pour son arrêt en vue d'une suspension de l'aspiration, indépendamment du moyen d'aspiration principal (5'),
dispositif de moule (1) **caractérisé en ce que** la seconde partie de moule (3') comporte au moins une pièce rapportée de formage en creux (7), ladite pièce (7) étant arrangée de manière à être située, lorsque le moule est fermé, directement en regard de la ou respectivement de chaque zone limitée particulière (6') de la surface de travail (4) de la première partie de moule (3) et eu ce que la ou chaque piéce rapportée de formage en creux (7) est mobile en translation, préferentiellement selon une direction sensiblement perpendiculaire à la surface de travail (4') de la seconde partie de moule (3') ou au plan qui est tangent localement à ladite surface de travail (4'), ladite pèce (7) étant avantageusement montée de manière interchangeable sur ladite seconde partie de moule (3').

2. Dispositif de moule selon la revendication 1, **caractérisé en ce que** le ou chaque moyen d'aspiration secondaire (5") et apte et destiné à générer une pression positive ou une action de soufflage au niveau de la ou de chaque zone limitée particulière (6') de la surface de travail de la première partie de moule (3).

3. Dispositif de moule selon l'une quelconque des revendications 1 et 2, **caractérisé en ce que** la première partie de moule (3) comporte une paroi multiperforée ou poreuse (8) perméable aux gaz, fournissant la surface de travail (4) de ladite partie (3), une chambre d'aspiration principale (9) et au moins une chambre d'aspiration secondaire (9'), lesdites chambres (9 et 9') étant situées du côté de la paroi (8) opposée à la surface de travail (4), reliées à une ou plusieurs lignes d'aspiration et délimitées en partie par une portion de la paroi poreuse ou multiperforée (8) correspondant à la portion majoritaire (6) de la surface de travail (4) ou à une ou au moins une zone limitée particulière (6') de ladite surface (4), respectivement, ladite paroi poreuse ou multiperforée (8), les chambres d'aspiration (9 et 9') et la ou les lignes d'aspiration formant ensemble les moyens d'aspiration principal (5') et secondaire(s) (5").

4. Dispositif de moule selon l'une quelconque des revendications 1 à 3, **caractérisé en ce que** la surface de travail (4) de la première partie de moule (3) comporte des motifs structurels en relief sur toute son étendue, à savoir au niveau de sa portion majoritaire (6) et de sa ou ses zone(s) limitée(s) particulière(s) (6').

5. Dispositif de moule selon l'une quelconque des revendications 1 à 4, **caractérisé en ce que** la ou chaque zone limitée particulière (6) de la surface de travail (4) de la première partie de moule (3) présente une extension surfacique au moins légèrement supérieure à celle la pièce rapportée de formage en creux (7) correspondante présente sur la seconde partie de moule (3'), notamment légèrement débordante périphériquement.

6. Dispositif de moule selon l'une quelconque des revendications 1 à 4, **caractérisé en ce qu'**une ligne d'aspiration (10) est associée à la ou à chaque pièce rapportée de formage en creux (7), ladite pièce (7) présentant avantageusement une paroi poreuse ou multiperforée (7') fournissant la surface de travail ou de conformation en creux.

7. Dispositif de moule selon l'une quelconque des revendications 1 à 6, **caractérisé en ce que** la seconde partie de moule (3') comprend au moins une pièce de formage en creux (7) présentant un bord périphérique (7"), pouvant être reliée sélectivement à une source d'aspiration ou de mise en dépression par une ligne d'aspiration (10) et pouvant être déplacée entre, d'une part, une position repliée, dans laquelle ladite pièce de formage (7) est située au plus en affleurement avec la paroi (2") de la pièce thermoformée (2), voire en retrait ou au plus en affleurement par rapport à la surface de la seconde partie du moule (3') et, d'autre part, une position déployée, dans laquelle ladite pièce de formage (7) vient, avec son bord périphérique (7"), à proximité de ou en application contre la paroi (2") de la pièce thermoformée (2) en appui contre la première partie de moule (3).

8. Dispositif de moule selon l'une quelconque des revendications 1 à 7, **caractérisé en ce que** le bord périphérique (7") de la pièce de formage (7) présente une conformation incurvée vers l'intérieur, éventuellement pourvu d'un joint de compression (7"'), apte à délimiter, lors du contact ou en début de déformation, une chambre (11) sensiblement étanche avec la paroi (2") de la pièce thermoformée (2) et **en ce que** ladite pièce de formage en creux (7) est montée mobile, éventuellement avec guidage en translation dans un logement (12) ménagé dans la seconde partie de moule (3'), ledit guidage étant préférentiellement également assuré en position déployée de ladite pièce de formage (7).

9. Dispositif de moule selon l'une quelconque des revendications 1 à 8, **caractérisé en ce que** la pièce de formage en creux (7), avantageusement en forme de coquille, est montée sur au moins un axe support (13), préférentiellement de manière aisément interchangeable, lequel présente un canal d'aspiration ou est traversé par un conduit d'aspiration (10) relié à au moins un orifice traversant, à des canaux secondaires ou à des micro-perforations ménagé(s) dans la paroi (7') de ladite pièce de formage (7) et débouchant sur la face interne de travail ou de conformation de ladite pièce de formage (7) et **en ce que** le déplacement bidirectionnel de cette pièce de formage en creux (7) est réalisée par l'intermédiaire d'un vérin pneumatique ou hydraulique, monté et positionné sur ou dans la seconde partie de moule (3'), le guidage en coulissement de ladite pièce (7) étant réalisé par le vérin et/ou par une structure de guidage particulière additionnelle.

10. Procédé de fabrication d'une pièce à paroi mince à partir d'une feuille en un matériau thermoplastique, par mise en œuvre du dispositif de moule (1) selon l'une quelconque des revendications 1 à 9, ladite pièce (2) devant ou non comprendre au moins une zone localisée présentant une configuration particulière (14),
ledit procédé consistant à mettre en place une feuille (2'), éventuellement soumise à un préchauffage, entre des première et seconde parties de moule (3 et 3'), à fermer ledit moule pour former une cavité sensiblement étanche (15) entre les deux parties de moule (3 et 3'), et éventuellement préformer ladite feuille (2'), et à conformer ladite feuille (2') par déformation plastique par son application intime contre la surface de travail ou de conformation (4) d'une première partie de moule (3) sous l'effet d'une succion ou aspiration de manière à réaliser la pièce (2), à ouvrir le moule et à en extraire la pièce thermoformée (2) résultante,
procédé **caractérisé en ce qu'**il consiste en outre, de manière sélective et en fonction de la version de la pièce (2) à obtenir, à réaliser le cas échéant au moins une déformation locale de la feuille (2'), après conformation de ladite feuille (2') par application contre la première partie de moule (3) et alors que cette dernière est dans un état autorisant sa déformation plastique, ladite ou chaque opération de déformation locale étant effectuée par déplacement de la portion de feuille (14') concernée dans une pièce de formage en creux (7) présente au niveau de la seconde partie de moule (3'), après suppression de l'aspiration au niveau de la ou des zone(s) limitée(s) particulière(s) (6') de la surface de travail (4) de la première partie de moule (3), le déplacement de la ou des portions de feuille (14') à déformer étant obtenu par une action de soufflage au niveau de la ou des zone(s) limitée(s) particulière(s) (6'), par une action d'aspiration au niveau de la pièce de formage en creux (7) ou par une combinaison des deux actions précitées, la feuille (2') étant maintenue intimement contre la portion majoritaire (6) de la surface de travail (4) de la première partie de moule (3) durant la réalisation de la ou des déformation(s) locale(s) (14)

11. Procédé de fabrication selon la revendication 10, **caractérisé en ce que** l'étape de réalisation d'une déformation locale de la feuille consiste à effectuer les opérations suivantes :
- relâchement de l'aspiration au niveau de la zone limitée particulière (6') concernée de la surface de travail (4) de la première partie de moule (3) ;
- déplacement de la pièce de formage en creux (7) depuis une position repliée jusqu'à une position déployée dans laquelle elle vient à proximité de ou en appui, éventuellement sous pression contrôlée, contre la feuille (2') formant la paroi (2") de la pièce (2), avec son bord périphérique (7") ;
- application d'une aspiration ou réalisation d'une dépression dans la pièce de formage (7) et/ou soufflage depuis la zone limitée particulière (6') de manière à déformer localement la feuille (2') et à la plaquer intimement contre la surface de la paroi (7') de ladite pièce de formage ;
- coupure de l'aspiration au niveau de la pièce (7) et/ou suppression du soufflage au niveau de la portion de surface (6') ;
- déplacement de la pièce de formage (7) vers sa position repliée.

12. Procédé de fabrication selon l'une quelconque des revendications des revendications 10 et 11, **caractérisé en ce qu'**il consiste, après relâchement de l'aspiration au niveau de la ou de chaque zone limitée particulière (6'), à réaliser tout d'abord une première déformation locale par soufflage pour amener la feuille (2') en contact avec le bord (7") de la pièce (7), puis à réaliser une déformation complémentaire et le formage définitif de la zone (14) de peau (2') concernée par aspiration contre la face interne de ladite pièce (7).

13. Procédé de fabrication selon l'une quelconque des revendications 10 à 12, **caractérisé en ce qu'**il consiste à produire sélectivement, sur une période de production déterminée, et en fonction d'un programme de fabrication donné résultant par exemple d'un regroupement de commandes clients diversifiées en termes de version de la pièce (2) souhaitée, des pièces (2) comportant ou non une ou plusieurs zone(s) (14) locale(s) à déformation ou configuration particulières.

14. Procédé de fabrication selon l'une quelconque des revendications 10 à 13, **caractérisé en ce qu'**il consiste, entre deux cycles ou programmes de fabrication de pièces (2) de versions différentes et devant présenter une ou des zone(s) (14) localement déformée(s) de configuration(s) et d'aspect(s) différents, à interchanger une ou plusieurs pièce(s) de formage en creux (7).

15. Elément de garniture ou d'habillage intérieur formé par une pièce thermoformée à paroi mince ou comprenant une face apparente fournie par une telle pièce, ladite pièce (2) comportant au moins une zone localisée (14) présentant une déformation locale de sa paroi (2") ou une configuration locale particulière, notamment une déformation en creux, et faisant préférentiellement état en surface d'un motif ou relief répétitif,
élément **caractérisé en ce que** la pièce thermoformée (2) est obtenue par l'intermédiaire du procédé de fabrication selon l'une quelconque des revendications 10 à 14 et comporte au moins une zone avec une déformation en creux (14), formant par exemple un logement pour la réception d'un accessoire, ainsi qu'éventuellement un motif en relief répétitif, présent sur toute la surface de ladite pièce (2), ladite déformation en creux (14) consistant en une déformation plastique locale de la feuille (2') formant la pièce (2) obtenue par aspiration de la portion de feuille (14') concernée dans une pièce de formage en creux (7).

## Patentansprüche

1. Tiefziehformvorrichtung zur Herstellung eines dünnwandigen Teils aus einer Folie aus thermoplastischem Material mit folgenden Merkmalen,
die Formvorrichtung (1) besteht aus zwei Formteilen (3 und 3') mit Auflageflächen (4, 4') einer im Wesentlichen komplementären Form, von denen mindestens eines der Teile beweglich ist, um den Öffnungs- und Schließzustand der Form zu definieren, wobei das erste (3) der beiden Formteile (3, 3') mit einer Ansaugvorrichtung (5) ausgestattet ist, um die Folie (2') gegen ihre Auflagefläche (4) zu pressen,
die Ansaugvorrichtung (5) besteht einerseits aus einem Hauptansaugelement (5') zur Erzeugung eines Unterdrucks oder einer Saugkraft auf dem größeren Teilstück (6) der Auflagefläche (4) des ersten Formteils (3) und zum anderen aus mindestens einem sekundären Ansaugelement (5") zur Erzeugung eines Unterdrucks oder einer Saugkraft in mindestens einem bestimmten begrenzten Bereich (6') der Auflagefläche (4), und zwar zumindest teilweise unabhängig vom Hauptansaugelement (5'),
das bzw. jedes sekundäre Ansaugelement (5") kann/können zumindest für seine/ihre Abschaltung zur Unterbrechung der Ansaugvorrichtung empfohlen werden, und zwar unabhängig vom Hauptansaugelement (5'),
die Formvorrichtung (1) ist **dadurch gekennzeichnet, dass** das zweite Formteil (3') aus mindestens einem Hohlformeinsatz (7) besteht, wobei der Einsatz (7) so angeordnet ist, dass er bei geschlossener Form direkt gegenüber dem bzw. jedem einzelnen begrenzten Bereich (6') der Auflagefläche (4) des ersten Formteils (3) liegt, und dass der oder jeder einzelne Hohlformeinsatz (7) verschiebbar gelagert ist, vorzugsweise im Wesentlichen senkrecht zur Auflagefläche (4') des zweiten Formteils (3') oder zu der Ebene, die die Auflagefläche (4') lokal tangiert, wobei der Hohlformeinsatz (7) zur besseren Austauschbarkeit auf dem zweiten Formteil (3') montiert ist.

2. Die Formvorrichtung gemäß Anspruch 1 ist **dadurch gekennzeichnet, dass** das oder jedes sekundäre Ansaugelement (5") dazu dient, einen Überdruck oder eine Blaswirkung an dem oder jedem einzelnen bestimmten begrenzten Bereich (6') der Auflagefläche des ersten Formteils (3) zu erzeugen.

3. Die Formvorrichtung gemäß einem der Ansprüche 1 und 2 ist **dadurch gekennzeichnet, dass** das erste Formteil (3) aus einer mehrfach perforierten oder porösen gasdurchlässigen Wand (8), die die Auflagefläche (4) des Formteils (3) bildet, einer Hauptansaugkammer (9) und mindestens einer Nebenansaugkammer (9') besteht, wobei die Kammern (9 und 9') auf der der Auflagefläche (4) gegenüberliegenden Wandseite (8) angeordnet und mit einer oder mehreren Saugleitungen verbunden und teilweise durch einen Abschnitt der porösen oder mehrfach perforierten Wand (8) begrenzt sind, und zwar entsprechend dem größeren Teilstück (6) der Auflagefläche (4) bzw. einem oder mindestens einem bestimmten begrenzten Bereich (6') dieser Fläche (4), wobei die poröse oder mehrfach perforierte Wand (8), die Ansaugkammern (9 und 9') und die Saugleitung(en) zusammen das Hauptansaugelement (5') und das sekundäre Ansaugelement (5") bilden.

4. Die Formvorrichtung gemäß einem der Ansprüche 1 bis 3 ist **dadurch gekennzeichnet, dass** die Auflagefläche (4) des ersten Formteils (3) über ihre gesamte Ausdehnung, d. h. an ihrem größeren Teilstück (6) und an ihrem/ihren einzelnen begrenzten Bereich(en) (6') eine reliefartige Struktur aufweist.

5. Die Formvorrichtung gemäß einem der Ansprüche 1 bis 4 ist **dadurch gekennzeichnet, dass** der bzw. jeder einzelne begrenzte Bereich (6) der Auflagefläche (4) des ersten Formteils (3) eine Flächenausdehnung aufweist, die zumindest geringfügig größer ist als diejenige des entsprechenden Hohlformeinsatzes (7) auf dem zweiten Formteil (3'), d. h. der leicht über den Rand hinausragt.

6. Die Formvorrichtung gemäß einem der Ansprüche 1 bis 4 ist **dadurch gekennzeichnet, dass** der bzw. jeder einzelne Hohlformeinsatz (7) mit einer Saugleitung (10) verbunden ist, wobei dieser Einsatz (7) vorzugsweise eine poröse oder mehrfach perforierte Wand (7') darstellt, die die Auflagefläche oder Hohlform bildet.

7. Die Formvorrichtung gemäß einem der Ansprüche 1 bis 6 ist **dadurch gekennzeichnet, dass** das zweite Formteil (3') mindestens einen Hohlformeinsatz (7) mit umlaufendem Rand (7") umfasst, der über eine Saugleitung (10) wahlweise an eine Saug- oder eine Vakuumquelle angeschlossen werden kann, und der zum einen zwischen einer Klappstellung, in welcher der Hohlformeinsatz (7) höchstens bündig mit der Wand (2") des warmgeformten Teils (2) bzw. rückversetzt oder bündig mit der Fläche des zweiten Formteils (3') angeordnet ist, und zum anderen einer ausgefahrenen Position verschiebbar ist, in welcher das Formteil (7) mit seinem umlaufenden Rand (7") in die Nähe der oder anliegend an die Wand (2") des warmgeformten Teils (2) gelangt und gegen das erste Formteil (3) drückt.

8. Die Formvorrichtung gemäß einem der Ansprüche 1 bis 7 ist **dadurch gekennzeichnet, dass** der umlaufende Rand (7") des Formteils (7) eine nach innen gerichtete Krümmung aufweist, die gegebenenfalls mit einer Kompressionsdichtung (7"'), versehen ist, mit der bei Kontakt oder zu Beginn der Verformung eine im Wesentlichen abgedichtete Kammer (11) von der Wand (2") des warmgeformten Teils (2) abgegrenzt werden kann, dass der Hohlformeinsatz (7) beweglich montiert ist, gegebenenfalls in einer verschiebbaren Führung in einem Gehäuse (12), das im zweiten Formteil (3') untergebracht ist, wobei diese Führung vorzugsweise auch in der ausgefahrenen Position des Formteils (7) gewährleistet ist.

9. Die Formvorrichtung gemäß einem der Ansprüche 1 bis 8 ist **dadurch gekennzeichnet, dass** der Hohlformeinsatz (7) in vorteilhafter Schalenform auf mindestens einem vorzugsweise leicht austauschbaren Träger (13) gelagert ist, der einen Saugkanal aufweist oder von einem mit mindestens einer Durchgangsöffnung verbundenen Saugrohr (10) durchquert wird und mit Nebenkanälen oder Mikroperforationen in der Wand (7') des Formteils (7) verbunden ist, wobei diese an der inneren Auflage- oder Formfläche des Formteils (7) enden, und dass die bidirektionale Verschiebung dieses Hohlformeinsatzes (7) mittels eines pneumatischen oder hydraulischen Zylinders erfolgt, der auf oder in dem zweiten Formteil (3') montiert und positioniert ist, wobei die Gleitführung dieses Teils (7) durch den Zylinder und/oder eine zusätzliche Spezialführung bewerkstelligt wird.

10. Verfahren zur Herstellung eines dünnwandigen Teils aus einer Folie aus thermoplastischem Material unter Verwendung der Formvorrichtung (1) gemäß einem der Ansprüche 1 bis 9, wobei das Teil (2) mindestens einen lokalisierten Bereich mit einer bestimmten Struktur (14) aufweisen kann, jedoch nicht aufweisen muss,
dieses Verfahren umfasst das Einlegen einer Folie (2'), die gegebenenfalls vorerwärmt wurde, zwischen das erste und das zweite Formteil (3 und 3'), das Schließen der Form, um einen im Wesentlichen abgedichteten Hohlraum (15) zwischen den beiden Formteilen (3 und 3') zu bilden, und gegebenenfalls das Vorformen der Folie (2'), sowie daraufhin die Formung dieser Folie (2') durch plastische Verformung mittels Anpressen gegen die Auflage- oder Formfläche (4) des ersten Formteils (3) unter der Wirkung von Saug- oder Ansaugeinwirkung, um das Teil (2) herzustellen, die Form zu öffnen und das erzielte warmgeformte Teil (2) herauszuziehen,
das Verfahren ist **dadurch gekennzeichnet, dass** es außerdem darin besteht, selektiv und je nach Ausführung des Teils (2) gegebenenfalls mindestens eine lokale Verformung der Folie (2') herzustellen, nachdem diese Folie (2') durch Anpressen gegen das erste Formteil (3) geformt wurde, wobei dieses sich in einem Zustand befindet, der seine plastische Verformung ermöglicht, dieser oder jeder einzelne lokale Verformungsvorgang durch Verlagerung des betreffenden Folienabschnitts (14') in einem Hohlformeinsatz (7) erfolgt, der sich in Höhe des zweiten Formteils (3') befindet, und zwar nach Abschaltung der Ansaugvorrichtung an der/den betreffenden begrenzten Bereich(en) (6') der Auflagefläche (4) des ersten Formteils (3), wobei die Verlagerung des/der zu verformenden Folienabschnitts/-abschnitte (14') durch einen Blasvorgang an dem bzw. den jeweiligen begrenzten Bereich(en) (6'), einen Ansaugvorgang in Höhe des Hohlformeinsatzes (7) oder durch eine Kombination aus den beiden beschriebenen Vorgängen erreicht wird, indem die Folie (2') während des Vorgangs der lokalen Verformung(en) (14) eng gegen das größere Teilstück (6) der Auflagefläche (4) des ersten Formteils (3) gehalten wird.

11. Herstellungsverfahren gemäß Anspruch 10, das **dadurch gekennzeichnet ist, dass** der Schritt zur Durchführung einer lokalen Verformung der Folie aus folgenden Vorgängen besteht:
- Lösen der Ansaugvorrichtung in Höhe des betreffenden begrenzten Bereichs (6') der Auflagefläche (4) des ersten Formteils (3);
- Verlagerung des Hohlformeinsatzes (7) aus einer eingefahrenen Position in eine ausgefahrene Position, in der er, gegebenenfalls unter kontrolliertem Druck, mit seinem umlaufenden Rand (7") in die Nähe der oder anliegend an die Folie (2') gelangt, die die Wand (2") des Teils (2) gelangt;
- Verwendung einer Ansaugvorrichtung oder Erzeugung eines Unterdrucks im Formteil (7) und/oder eines Blasvorgangs aus dem betreffenden begrenzten Bereich (6'), um die Folie (2') lokal zu verformen und es eng gegen die Fläche der Wand (7') des Formteils zu pressen;
- Trennen der Ansaugvorrichtung in Höhe des Teils (7) und/oder Abstellen des Blasvorgangs in Höhe des jeweiligen Flächenabschnitts (6');
- Verlagerung des Formteils (7) in seine eingefahrene Position.

12. Herstellungsverfahren gemäß einem der Ansprüche 10 und 11, das **dadurch gekennzeichnet ist, dass** es nach dem Lösen der Ansaugvorrichtung in Höhe des betreffenden begrenzten Bereichs bzw. jedes einzelnen betreffenden begrenzten Bereichs (6') darin besteht, dass zunächst durch einen Blasvorgang eine erste lokale Verformung erfolgt, um die Folie (2') in Kontakt mit dem Rand (7") des Teils (7) zu bringen, und daraufhin eine ergänzende Verformung und endgültige Formgebung des Bereichs (14) der betreffenden Hülle (2') vorgenommen wird, und zwar mittels Ansaugen gegen die Innenfläche des Teils (7).

13. Herstellungsverfahren gemäß einem der Ansprüche 10 bis 12, das **dadurch gekennzeichnet ist, dass** es darin besteht, über einen vorgegebenen Produktionszeitraum und nach einem bestimmten Herstellungsprogramm, das sich beispielsweise aus einer Gruppierung von Kundenaufträgen ergibt, bei denen verschiedene Ausführungen des Teils (2) gewünscht werden, selektiv Teile (2) herzustellen, die fakultativ eine oder mehrere lokale Zone(n) (14) mit besonderer Verformung oder Struktur aufweisen können.

14. Herstellungsverfahren gemäß einem der Ansprüche 10 bis 13, das **dadurch gekennzeichnet ist, dass** ein Hohlformeinsatz oder mehrere Hohlformeinsätze (7) zwischen zwei Produktionszyklen oder -programmen zur Herstellung von Teilen (2) verschiedener Ausführungen gewechselt werden kann/können, wobei diese eine oder mehrere lokal verformte Zone(n) (14) unterschiedlicher Strukturen und Erscheinungsbilder aufweisen müssen.

15. Element zur inneren Verstärkung oder Auskleidung bestehend aus einem warmgeformten Teil entweder mit dünner Wand oder bestehend aus einer sichtbaren Fläche, die von diesem Teil gebildet wird, wobei dieses Teil (2) mindestens einen lokalisierten Bereich (14) enthält, der eine lokale Verformung seiner Wand (2") oder eine bestimmte lokale Struktur aufweist, insbesondere eine Hohlverformung, und der vorzugsweise einen Oberflächenzustand eines sich wiederholenden Musters oder Reliefs aufweist,
Element, das **dadurch gekennzeichnet ist, dass** das warmgeformte Teil (2) durch das Herstellungsverfahren gemäß einem der Ansprüche 10 bis 14 erzielt wird und mindestens einen Bereich mit einer Hohlverformung (14) enthält, die beispielsweise einen Raum zur Aufnahme von Zubehörteilen bildet, sowie möglicherweise ein sich wiederholendes Reliefmuster, das sich über die gesamte Fläche des Teils (2) erstreckt, wobei die Hohlverformung (14) aus einer lokalen plastischen Verformung der Folie (2') besteht, die das Teil (2) bildet und durch Ansaugen des betreffenden Folienabschnitts (14') in ein Hohlformteil (7) hergestellt wird.

## Claims

1. Thermoforming mould device for manufacturing a thin-walled part from a sheet of thermoplastic material,
the said mould device (1) comprising two mould parts (3 and 3') with work areas (4, 4') in substantially complementary forms and of which at least one of the parts is movable so as to define a state of opening and a state of closure of the mould, a first (3) of the two mould parts (3, 3') containing suction means (5) in order to attach the sheet (2') to its work area (4),
the suction means (5) comprising, on one hand, a main suction means (5') suitable for generating negative pressure or suction on a majority section (6) of the work area (4) of the said first mould part (3) and, on the other hand, at least one secondary suction means (5") suitable for generating negative pressure or suction at the level of at least one specific limited section (6') of the said work area (4), this at least partially in an independent manner with regard to the main suction means (5'),
the or each secondary suction means (5") able to be controlled, at least to be stopped for the purpose of suspending the suction, independently of the main suction means (5'),
mould device (1) **characterised in that** the second mould part (3') comprises at least one hollow moulded part (7), the said part (7) being arranged in a way to be located, when the mould is closed, directly facing the or each specific limited section (6') respectively of the work area (4) of the first mould part (3), and **in that** the or each hollow moulded part (7) is movable in translation, preferably according to a direction substantially perpendicular to the work area (4') of the second mould part (3') or on a plane which is locally tangential to the said work area (4'), the said part (7) being advantageously mounted in an interchangeable manner on the said second mould part (3').

2. Mould device according to claim 1, **characterised in that** the or each secondary suction means (5") is suitable and intended for generating positive pressure or a blowing action level with the or each specific limited section (6') of the work area of the first mould part (3).

3. Mould device according to one of claims 1 and 2, **characterised in that** the first mould part (3) has a gas-permeable multi-perforated or porous wall (8), providing the work area (4) of the said part (3), a main suction chamber (9) and at least one secondary suction chamber (9'), the said chambers (9 and 9') being located on the side of the wall (8) opposite the work area (4), linked to one or many suction lines and partly bounded by a section of the porous or multi-perforated wall (8) corresponding to the main section (6) of the work area (4) or to one or at least one specific limited section (6') of the said area (4), respectively, the said porous or multi-perforated wall (8), the suction chambers (9 and 9') and the or each suction lines forming together the main and secondary suction means (5' and 5").

4. Mould device according to any one of claims 1 to 3, **characterised in that** the work area (4) of the first mould part (3) has structural relief patterns along all its length, specifically in its main section (6) and its specific limited section(s) (6').

5. Mould device according to any one of claims 1 to 4, **characterised in that** the or each specific limited section (6) of the work area (4) of the first mould part (3) presents a surface extension at least slightly above the corresponding hollow moulded part (7) present on the second mould part (3'), notably slightly peripherally beyond same.

6. Mould device according to any one of claims 1 to 4, **characterised in that** a suction line (10) is attached to the or each hollow moulded part (7), the said part (7) advantageously having a porous or multi-perforated wall (7') providing the work area or hollow shape.

7. Mould device according to any one of claims 1 to 6, **characterised in that** the second mould part (3') comprises at least one hollow moulded part (7) having a peripheral edge (7"), able to be linked selectively to a suction source or pressed by a suction line (10) and able to be moved between, on one hand, a folded position, in which the said moulding part (7) is located most flush with the wall (2") of the thermoformed part (2), even set back or most flush with the surface of the second mould part (3') and, on the other hand, a deployed position, in which the said moulding part (7) comes, with it peripheral edge (7"), close to or placed against the wall (2") of the thermoformed part (2) supported against the first mould part (3).

8. Mould device according to any one of claims 1 to 7, **characterised in that** the peripheral edge (7") of the moulding part (7) has an inward curved shape, potentially equipped with a compression seal (7"'), suitable for defining, in the case of contact or at the start of deformation, a chamber (11) substantially airtight with the wall (2") of the thermoformed part (2) and **in that** the said hollow shaped part (7) is mounted and movable, possibly with guiding in translation in a housing (12) based in the second mould part (3'), the said guiding being preferably equally assured in a deployed position of the said moulding part (7).

9. Mould device according to any one of claims 1 to 8, **characterised in that** the hollow moulding part (7), advantageously in a shell-shape, is mounted on at least one support axis (13), preferably in an easily interchangeable manner, which has a suction channel or is crossed by a suction pipe (10) connected to at least one crossing orifice, to the secondary channels or micro-perforations housed in the wall (7') of the said moulding part (7) and emerging on the internal work or conforming face of the said moulding part (7) and **in that** the bidirectional movement of this hollow moulding part (7) is made by the intermediary of a pneumatic or hydraulic actuator, mounted and positioned on or in the second mould part (3'), the sliding control of the said part (7) being made by the actuator and/or by a specific additional control device .

10. Method for manufacturing a thin-walled part from a thermoplastic sheet, by implementing the mould device (1) according to any one of claims 1 to 9, the said part (2) having, or not, to include at least one localised section having a specific configuration (14),
the said method consisting of putting into place a sheet (2'), potentially being pre-heated, between the first and second mould parts (3 and 3'), closing the said mould to form a substantially airtight cavity (15) between the two mould parts (3 and 3'), and potentially pre-forming the said sheet (2'), and conforming the said sheet (2') by plastic deformation by its close application to the work or conformation area (4) of a first mould part (3) under the effect of a suction or vacuum so as to make the part (2), opening the mould and extracting from it the resulting thermoformed part (2),
method **characterised in that** it also consists, in a selective manner and depending on the version of the part (2) to be obtained, in making if appropriate at least one local deformation to the sheet (2'), after conformation of the said sheet (2') by application against the first mould part (3) and whilst this latter is in a state authorising its plastic deformation, the said or each local deformation operation being made by moving the part of the relevant sheet (14') in a hollow moulding part (7) present in the second mould part (3'), after removal of the suction from the specific limited section(s) (6') of the work area (4) of the first mould part (3), the displacement of the or each sheet portions (14') to be deformed being obtained by a blowing action in the specific limited section(s) (6'), by a suction action in the hollow moulding part (7) or by a combination of the two above-cited actions, the sheet (2') being maintained closely in contact with the main portion (6) of the work area (4) of the first mould part (3) during the manufacture of the local deformation(s) (14)

11. Manufacturing method according to claim 10, **characterised in that** the production stage of a local deformation of the sheet consists in performing the following operations:
- relaxing of the suction in the relevant specific limited section (6') of the work area (4) of the first mould part (3);
- movement of the hollow moulding part (7) from a folded position to a deployed position in which it comes close to or into contact with, potentially under controlled pressure, the sheet (2') forming the wall (2") of the part (2), with its peripheral edge (7");
- application of a suction or production of a depression in the moulding part (7) and/or blowing from the specific limited section (6') so as to locally deform the sheet (2') and attach it closely to the surface of the wall (7') of the said moulding part;
- stopping the suction in the part (7) and/or removal of the blowing on the surface portion (6');
- moving the moulding part (7) to its folded position.

12. Manufacturing method according to any one of the claims 10 and 11, **characterised in that** it consists of, after reducing the suction in the or each specific limited section (6'), producing first of all a first local deformation by blowing to bring the sheet (2') into contact with the edge (7") of the part (7), then producing a complementary deformation and the definitive moulding of the skin area (14) affected by suction against the internal side of the said part (7).

13. Manufacturing method according to any one of claims 10 to 12, **characterised in that** it consists of producing selectively, in a determined production period, and depending on a given manufacturing programme resulting, for example, from a grouping of diverse client orders in terms of the version of the desired part (2), parts having, or not, one or many local areas (14) for specific deformation or configuration.

14. Manufacturing method according to any one of claims 10 to 13, **characterised in that** it consists, between two manufacturing cycles or programmes of parts (2) of different versions having to have one or more locally deformed areas (14) of different configuration(s) and aspect(s), of interchanging one or more hollow moulding parts (7).

15. Interior lining or covering part formed of a thin-walled thermoformed part or comprising a visible side provided by such a part, the said part (2) comprising at least one localised area (14) having a local deformation of its wall (2") or a specific local configuration, particularly a hollow deformation, and forming preferentially a surface of a repeating pattern or relief,
component **characterised in that** the thermoformed part (2) is obtained by means of the manufacturing method according to any one of claims 10 to 14 and comprises at least one area with a hollow deformation (14), forming, for example, a housing for receiving an accessory, as well as potentially a repeating relief pattern, present on the entire surface of the said part (2), the said hollow deformation (14) consisting of a local plastic deformation of the sheet (2') forming the part (2) obtained through suction of the portion of the relevant sheet (14') in a hollow moulding part (7).
